# EUROPÄISCHE PATENTSCHRIFT

(11) **EP 0 542 297 B1**
(45) Veröffentlichungstag und Bekanntmachung des Hinweises auf die Patenterteilung: **12.04.1995**
(21) Anmeldenummer: 92119458.5
(22) Anmeldetag: 13.11.1992
(51) Int. Cl.: E01C 19/48

(54) **Ultraschallsensor-Regeleinrichtung für einen Strassenfertiger**
Ultrasonic control device for a road-finisher
Appareil de contrôle pour un finisseur

(30) Priorität: 15.11.1991 DE 9114281 U; 30.10.1992 DE 9214769 U
(43) Veröffentlichungstag der Anmeldung: 19.05.1993
(73) Patentinhaber: MOBA-electronic Gesellschaft für Mobil-Automation mbH, D-65604 Elz (DE)
(72) Erfinder: Sehr, Willibald, W-6253 Hadamar/Steinbach (DE); Zarniko, Martin, W-6252 Diez (DE)
(74) Vertreter: Schoppe, Fritz, Dipl.-Ing.

(56) Entgegenhaltungen:
- US-A- 4 933 853
- US-A- 4 961 173
- PATENT ABSTRACTS OF JAPAN vol. 015, no. 010 (M-1068) 10. Januar 1991 & JP-A-22 61 105 (NIIGATA ENG CO) 23. Oktober 1990
- PATENT ABSTRACTS OF JAPAN vol. 015, no. 505 (M-1194) 20. Dezember 1991 & JP-A-32 21 604 (SUMITOMI) 30. September 1991

## Beschreibung

Die vorliegende Erfindung betrifft eine Ultraschallsensor--Regeleinrichtung für einen Straßenfertiger zur Einstellung der Höhe einer höhenverstellbaren Bohle, deren Hinterkante die Lage der oberen Fläche des gefertigten, jedoch noch unverfestigten Straßenbelages definiert.

Allgemein läuft ein Straßenfertiger mit einem Kettenfahrwerk auf einem vorbereitetem Untergrund, auf den eine zu fertigende Straßendecke bzw. ein zu fertigender Straßenbelag aufzubringen ist. In Fahrtrichtung hinten am Straßenfertiger ist eine höhenverstellbare Bohle Vorgesehen, an deren Vorderseite ein Vorrat des Straßenbelagmateriales angehäuft ist, der durch eine Fördereinrichtung gefördert und verteilt wird, die dafür Sorge trägt, daß auf der Vorderseite der Bohle immer eine ausreichende, jedoch nicht zu große Menge des Straßenbelagmateriales bevorratet gehalten wird. Die Höhe der Hinterkante der Bohle gegenüber der Oberfläche des vorbereiteten Untergrundes, der gegebenenfalls auch durch eine alte Straßenbelagdecke gebildet sein kann, legt die Dicke der gefertigten Straßendecke Vor ihrer anschliessenden weiteren Verfestigung durch Walzen fest. Die Bohle ist an einem Zugarm gehalten, der um einen im Mittenbereich des Straßenfertigers angeordneten Zugpunkt drehbeweglich gelagert ist, wobei die Höhenlage der Bohle Von einer Hydraulikverstelleinrichtung festgelegt wird.

Bei bekannten Straßenfertigern bedient man sich zur Steuerung der Höhe der Bohle, die die Dicke des zu fertigenden Straßenbelages festlegt, einer mechanischen Tastvorrichtung, die neben dem Straßenfertiger entlang einer Referenzfläche geführt wird. Entsprechend einer durch eine Auswertungseinrichtung erfaßten Höhe des Tastskis wird die Bohle in ihrer Höhe nachgestellt.

Die Referenzebene, entlang der der Tastski geführt wird, hängt Von dem momentanen Bearbeitungsgang ab. Typischerweise ist die Arbeitsbreite eines Straßenfertigers geringer als die Breite der zu fertigenden Straßendecke. Zur Festlegung des Höhenniveaus der zu fertigenden Straßendecke dient üblicherweise ein gespanntes Stahlseil als Referenzhöhe für eine zu fertigende erste Bahn der gesamten Straßendecke. Beim Legen der zweiten Bahn, die ohne Höhenversatz an die erste Bahn anschließen soll, wird der Tastski über die soeben gefertigte erste Bahn geführt, die dann die Referenzfläche bildet. So ist es bei bekannten Straßenfertigern möglich, durch Verwendung eines Tastskis unterschiedliche Gegenstände, wie beispielsweise das gespannte Referenzseil bzw. die soeben gefertigte Bahn der Straßendecke, als Referenzebene heranzuziehen.

Jedoch hat diese bekannte Art der Höhenregelung der Bohle einige systembedingte Nachteile, die bislang als nicht überwindbar angesehen wurden. Wenn beispielsweise eine gefertigte Bahn der Straßendecke als Referenzebene für die Führung des Tastskis bei der Fertigung der zweiten Bahn verwendet wird und wenn die erste Bahn eine gewisse, unerwünschte Welligkeit hat, so wird nötigerweise auch die zweite Bahn mit Fehlern behaftet aufgebaut, die einer Abbildung der Fehler der Straßendecke an dem von dem Tastski abgetasteten Bereich entsprechen.

Die mechanische Abtastung mittels eines Tastskis folgt nötigerweise einer Art Hüllkurve, über die jeweils höchsten Punkte der Referenzfläche. Wenn nun beispielsweise auf der Referenzfläche ein unerwünschtes Hindernis beispielsweise in Form eines Steines liegt, so führt die durch diese Störstellen bewirkte unerwünschte Auslenkung des Tastskis zu einem entsprechendem Höhenfehler der gefertigten Bahn der Straßendecke. Ein weiteres Problem liegt in der mechanischen Empfindlichkeit des Tastskis begründet, der nicht nur bei Unachtsamkeit des Bedienungspersonales leicht Schaden nehmen kann, sondern auch bei üblichem Betrieb schnell verschleißt.

Aus dem US-A-4,961,173 der Anmelderin ist bereits ein Steuersensor für eine Baumaschine zum Erzeugen von Höhensteuersignalen und Richtungssteuersignalen durch Abtastung eines Referenzseiles oder Führungsseiles bekannt. Der bekannte Steuersensor verfügt über eine Mehrzahl von quer zur Bewegungsrichtung der Baumaschine angeordneten Ultraschallsendeempfängern, die derart eng benachbart zueinander liegen, daß sich ihre Strahlungskeulen in der Meßebene, in der das Führungsseil oder Referenzseil liegt, überlappen.

Ausgehend von diesem Stand der Technik liegt der Erfindung die Aufgabe zugrunde, eine Regeleinrichtung für einen Straßenfertiger zu schaffen, die trotz unempfindlicher Bauweise eine genauere Einstellung der Höhe der höhenverstellbaren Bohle des Straßenfertigers ermöglicht.

Diese Aufgabe wird durch eine Ultraschallsensor-Regeleinrichtung gemäß dem kennzeichnenden Teil des Patentanspruchs 1 gelöst.

Eine bevorzugte Ausführungsform der erfindungsgemäßen Ultraschallsensor-Regeleinrichtung wird nachfolgend unter Bezugnahme auf die beiliegenden Zeichnungen näher erläutert. Es zeigen:
- Fig. 1: eine Prinzipdarstellung eines Straßenfertigers, der mit einer Ausführungsform der erfindungsgemäßen Ultraschallsensor-Regeleinrichtung ausgestattet ist; und
- Fig. 2: ein Blockdiagramm der erfindungsgemäßen Ultraschallsensor-Regeleinrichtung.

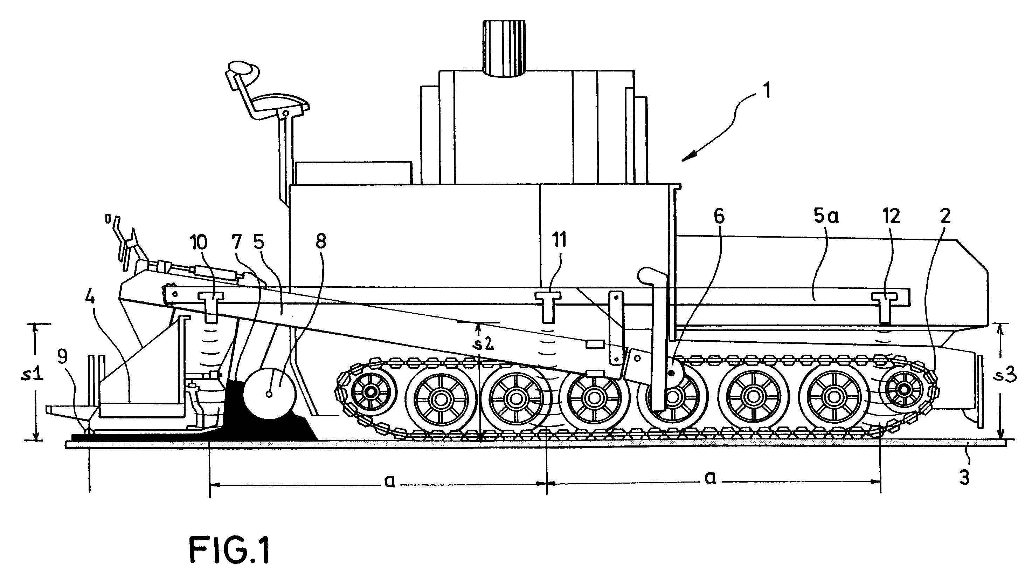

Wie in Fig. 1 dargestellt ist, hat ein Straßenfertiger, der in seiner Gesamtheit mit dem Bezugszeichen 1 bezeichnet ist, ein Kettenfahrwerk 2, mit dem der Straßenfertiger 1 auf einem vorbereiteten Untergrund 3 fährt. An dem in Fahrtrichtung hinteren Ende des Straßenfertigers 1 ist eine höhenverstellbare Bohle 4 angeordnet, die mittels eines Zugarmes 5 an einem Zugpunkt 6 an dem Straßenfertiger 1 angelenkt ist. Vor der Bohle 4 befindet sich ein Vorrat 7 des Asphaltmateriales, wobei dieser Vorrat durch entsprechende, an sich bekannte Regelung der Drehzahl einer schneckenartigern Fördereinrichtung 8 im wesentlichen über den gesamten Breitenbereich der Bohle konstant gehalten wird.

Die Bohle 4 schwimmt auf dem Asphalt der zu fertigenden Straßendecke auf. Die Dicke der zu fertigenden Straßendecke vor ihrer Endverfestigung durch Straßenwalzen wird durch Ausregelung der Höhenlage der Hinterkante 9 der Bohle 4 eingestellt. Diese Höhenregelung wird durch Veränderung des Anstellwinkels der Bohle 4 herbeigeführt, und erfolgt typischerweise durch die Ansteuerung von Stellzylindern, die an den vorderen Enden der Zugarme 5 eingreifen.

Der insoweit beschriebene Straßenfertiger stimmt mit Straßenfertigen nach dem Stand der Technik überein, so daß in Anbetracht des Wissens des Fachmannes auf dem vorliegenden Gebiet auf eine detailliertere Beschreibung verzichtet werden kann.

Gemäß der Erfindung sind mehrere Ultraschallsensoren 10, 11, 12 vorgesehen, wobei bei dem Ausführungsbeispiel, das in Fig. 1 dargestellt ist, drei Ultraschallsensoren 10, 11, 12 in jeweils bekannter Höhe mit bekannten gegenseitigen Abständen a an einer Halterung 5a, die an dem Zugarm 5 befestigt ist, angebracht sind. Die Anbringung der drei Ultraschallsensoren 10, 11, 12 an dem Zugarm 5 des Straßenfertigers 1 ist derart gewählt, daß die Schallkeulen der drei Ultraschallsensoren 10, 11, 12 im wesentlichen in Fahrtrichtung des Straßenfertigers 1 hintereinander jeweils senkrecht nach unten neben dem Kettenfahrwerk 2 auf eine Referenzfläche auftreffen, die beispielsweise durch eine bereits gefertigte oder alte Bahn der Straßendecke gebildet sein kann.

In jedem Fall ist die Lage der Ultraschallsensoren derart gewählt, daß sie in Fahrtrichtung des Straßenfertigers möglichst weit voneinander beabstandet sind. Wie noch im einzelnen ausgeführt wird, sind für die Zwecke der Erfindung mindestens drei gegeneinander beabstandete und im wesentlichen in Fahrtrichtung versetzte Ultraschallsensoren mit jeweils im wesentlichen nach unten gerichteten Schallkeulen erforderlich. Eine höhere Anzahl von Ultraschallsensoren ist möglich.

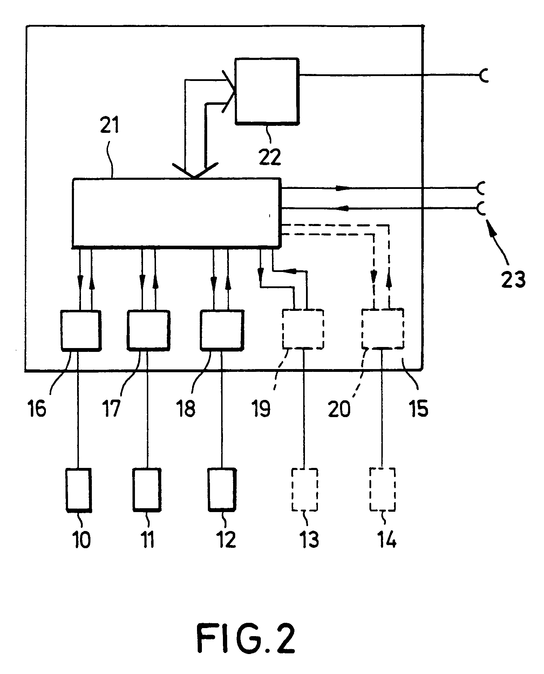

Wie in Fig. 2 gezeigt ist, sind die drei ebenfalls in Fig. 1 gezeigten Ultraschallsensoren 10, 11, 12 (sowie bei Bedarf weitere Ultraschallsensoren 13, 14, welche nur gestrichelt dargestellt sind), an eine Auswertungseinrichtung 15 angeschlossen. Die Auswertungseinrichtung 15 umfaßt eine der Anzahl der Ultraschallsensoren 10, 11, 12, 13, 14 entsprechende Anzahl von Sende-Empfangs-Schaltungen 16, 17, 18, 19, 20. Die Sende-Empfangs-Schaltungen 16 bis 20 sind mit einer Rechnereinheit 21, die beispielsweise durch einen Mikrorechner gebildet sein kann, verbunden. Der Mikrorechner steuert die Sende-Empfangs-Schaltungen 16 bis 20 derart an, daß die Ultraschallsensoren 10 bis 14 zyklisch der Reihe nach zur Abgabe von Ultraschallsignalen angeregt werden. Aus den jeweiligen Laufzeiten ab dem Anregen der Ultraschallsensoren bis zu dem Empfang eines von der Referenzebene reflektierten Ultraschallpulses ermittelt die Rechnereinheit 21 die Entfernungen s1, s2, s3, s4, s5 der Ultraschallsensoren 10, 11, 12, 13, 14 gegenüber jeweiligen Meßpunkten auf der Referenzfläche.

Die Auswertungseinrichtung nach dem Ausführungsbeispiel arbeitet mit nur drei Ultraschallsensoren 10, 11, 12, so daß die nachfolgend beschriebene Regelung aufgrund der Abstände s1, s2, s3 erfolgt.

Die Auswertungseinrichtung verwirft einen dieser gemessenen Abstände s1, s2, s3 als Fehlmessung, wenn der betreffende Meßpunkt um mehr als eine vorbestimmte Entfernung außerhalb derjenigen Ebene liegt, die durch die den übrigen Abständen zugeordneten Meßpunkte festgelegt ist. Eine mögliche, beispielshafte Überprüfung der gemessenen Abstände als Fehlmessung oder als gültige Messung wird weiter unten im einzelnen erläutert.

Aufgrund der nicht als Fehlmessung verworfenen Abstände projiziert die Auswertungseinrichtung 15 anhand der einzelnen Meßwerte und der Abstände zueinander eine resultierende Höhe an der Hinterkante 9. Mit anderen Worten leitet die Auswertungseinrichtung 15 aus der Höhe der Hinterkante 9 der Bohle 4 gegenüber der Referenzfläche, die sie aufgrund der Abstände s1, s2, s3 und der bekannten geometrischen Anordnung der Ultraschallsensoren 10, 11, 12 bezogen auf die Hinterkante 9 der Bohle 4 berechnet, und einer wählbaren Soll-Dicke des zu fertigenden Straßenbelages ein Höhensteuersignal für die Einstellung der Bohle 4 ab. Aufgrund der Lage der so berechneten Referenzebene an der Hinterkante 9 der Bohle 4 sowie aufgrund der vom Bedienungspersonal frei wählbaren Solldicke des zu fertigenden Straßenbelages wird ein Steuersignal für die Steuerung der Höhenlage der Hinterkante 9 der Bohle 4 erzeugt. Dieses Steuersignal kann beispielsweise über einen Digital-Analog-Wandler 22, der der Rechnereinheit 21 nachgeschaltet ist, einer an sich bekannten elektrohydraulischen Ansteuerung für die Höhenlage der Bohle 4 zugeführt werden. Ebenfalls kann das Steuersignal in digitaler Form über einen digitalen Ausgang 23 ausgegeben werden. Das Steuersignal dient über eine an sich bekannte Zugpunktverstelleinrichtung zur Höheneinstellung des Zugpunktes 6 des Zugarmes 5 an dem Straßenfertiger 1.

Bei dem Ausführungsbeispiel der Erfindung kann die Überprüfung der Fehlerhaftigkeit oder Gültigkeit der gemessenen Abstände, die Mittelungsberechnung aufgrund der gültigen Abstände und die Berechnung des Steuersignals durch sehr einfache Maßnahmen erfolgen.

Bei dem Ausführungsbeispiel sind die Ultraschallsensoren 10, 11, 12 mit gleichen Abständen a voneinander beabstandet in gleicher Höhe an der Halterung 5a angebracht. Bei dieser Ausführungsform ermittelt die Auswertungseinrichtung die Differenzen d12, d13, d23 von jeweils zwei Abständen s1 und s2 bzw. s1 und s3 bzw. s2 und s3. Die Auswertungseinrichtung stuft diejenigen Abstände als gültig ein, deren Differenzbetrag kleiner als ein Grenzwert ist. Wenn nun beispielsweise der dritte Ultraschallsensor 12 ein fehlerhaftes Abstandsmeßsignal s3 liefert, weil dessen Schallkeule auf ein auf dem Boden liegendes Hindernis beispielsweise in Form eines Steines auftrifft, so ist nur der Differenzbetrag d12 für den ersten und zweiten Abstand s1, s2 kleiner als ein Grenzwert, der eine zulässige Welligkeit der Referenzfläche definiert. Damit können die entsprechenden ersten und zweiten Abstände s1, s2 von der Auswertungseinrichtung als gültig eingestuft werden und der dritte Abstand s3 als Fehlmessung verworfen werden.

Die erfindungsgemäße Ultraschallsensor-Regeleinrichtung bewirkt einerseits, daß solche Abstandsmeßsignale, die außerhalb eines "Gültigkeitsfensters" liegen, keinen anteiligen, verfälschenden Einfluß auf die ermittelte Höhe der Referenzebene haben. Andererseits kann durch eine Mittelwertbildung eine Glättung der Referenzebene herbeigeführt werden, so daß auch eine Welligkeit der abgetasteten Referenzebene innerhalb gewisser Grenzen kompensiert werden kann. Selbstverständlich arbeitet die erfindungsgemäße Ultraschallsensor-Regeleinrichtung auf der Abtastseite kontaktfrei und daher verschleißfrei und ist entsprechend unempfindlich gegenüber Beschädigungen.

## Patentansprüche

1. Ultraschallsensor-Regeleinrichtung für einen Straßenfertiger (1) zur Einstellung der Höhe einer höhenverstellbaren Bohle (4) desselben, mit mindestens zwei Ultraschallsensoren (10, 11, 12) und mit einer Auswertungseinrichtung (15),
dadurch gekennzeichnet,
daß mindestens drei Ultraschallsensoren (10, 11, 12) im wesentlichen in der Bewegungsrichtung des Straßenfertigers (1) derart mit Abstand (a) voneinander an einer an der Bohle (4) befestigten Halterung (5a) angeordnet sind, daß zwischen den Strahlungskeulen der Ultraschallsensoren (10, 11, 12) auf einer Referenzfläche jeweils ein Abstand vorhanden ist,
daß die Auswertungseinrichtung (15) aufgrund der Ultraschallsensorsignale die Abstände (s1, s2, s3) eines jeden Ultraschallsensors (10, 11, 12) gegenüber der Referenzfläche erfaßt,
daß die Auswertungseinrichtung (15) einen der gemessenen Abstände (s1, s2, s3) als Fehlmessung verwirft, wenn der betreffende Meßpunkt um mehr als eine vorbestimmte Entfernung außerhalb derjenigen Ebene liegt, die durch die den übrigen Abständen zugeordneten Meßpunkte festgelegt ist, und
daß die Auswertungseinrichtung (15) aufgrund der nicht als Fehlmessung verworfenen Abstände (s1, s2, s3) und der bekannten geometrischen Anordnung der Ultraschallsensoren (10, 11, 12) bezogen auf die beim Fertigen aufschwimmende Hinterkante (9) der Bohle (4) die Höhe der Hinterkante (9) der Bohle (4) gegenüber der Referenzfläche berechnet und aus dieser Höhe und einer wählbaren Soll-Dicke des zu fertigenden Straßenbelages ein Höhensteuersignal für die Einstellung der Bohle (4) ableitet.

2. Ultraschallsensor-Regeleinrichtung nach Anspruch 1, dadurch gekennzeichnet,
daß die Ultraschallsensoren (10, 11, 12) in jeweils bekannter Höhe mit jeweils bekannten gegenseitigen Abständen an der an der Bohle (4) befestigten Halterung (5a) angebracht sind,
daß die Auswertungseinrichtung (15) die Differenzen (d12, d13, d23) von jeweils zwei Abständen (s1, s2; s1, s3; s2, s3) ermittelt, und
daß die Auswertungseinrichtung (15) diejenigen Abstände als gültig einstuft, deren Differenzbetrag kleiner als ein Grenzwert ist.

3. Ultraschallsensor-Regeleinrichtung nach einem der Ansprüche 1 bis 2, dadurch gekennzeichnet,
daß das von der Auswertungseinrichtung (15) erzeugte Höhensteuersignal zur Einstellung des Zugpunktes des Zugarmes (5) der Bohle (4) an dem Straßenfertiger (1) dient.

## Claims

1. Ultrasonic sensor control unit for a road finishing machine for adjusting the height of a vertically adjustable beam of said machine, comprising at least two ultrasonic sensors (10, 11, 12) and an evaluation means (15),
characterized in
that at least three ultrasonic sensors (10, 11, 12) are arranged on a holding device (5a), which is secured to the beam (4), in spaced relationship (a) with one another essentially in the direction of motion of the road finishing machine (1) in such a way that, on a reference surface, a distance exists between the individual radiation cones of said ultrasonic sensors (10, 11, 12),
that the evaluation means (15) detects the distances (s1, s2, s3) between each ultrasonic sensor (10, 11, 12) and the reference surface on the basis of the ultrasonic sensor signals,
that the evaluation means (15) rejects one of the measured distances (s1, s2, s3) as faulty measurement, if the measuring point in question lies more than a predetermined distance outside of the plane which is determined by the measuring points associated with the other distances, and
that the evaluation means (15) calculates the height of the rear edge (9) of the beam (4) relative to the reference surface, on the basis of the distances (s1, s2, s3) which have not been rejected as faulty measurements and the known geometrical arrangement of the ultrasonic sensors (10, 11, 12) with respect to said rear edge (9) of the beam (4), said rear edge (9) being in a floating condition when finishing the road, and derives from said height and from a selectable desired thickness of the road surfacing to be produced a height control signal for adjusting said beam (4).

2. An ultrasonic sensor control unit according to claim 1, characterized in
that the ultrasonic sensors (10, 11, 12) are attached to the holding device (5a), which is secured to the beam (4), on a respective known level and at known distances from one another,
that the evaluation means (15) determines the differences (d12, d13, d23) between two distances (s1, s2; s1, s3; s2, s3) in each case, and
that the evaluation means (15) classifies the distances whose difference is smaller than a limit value as valid distances.

3. An ultrasonic sensor control unit according to any of the claims 1 to 2, characterized in
that the height control signal, which is generated by the evaluation means (15), serves to adjust the tie point of the tie arm (5) of the beam (4) on the road finishing machine (1).

## Revendications

1. Appareil de contrôle à capteurs ultrasonores pour un finisseur (1), destiné au réglage de la hauteur d'une poutre (4) réglable en hauteur de ce dernier, avec au moins deux capteurs ultrasonores (10, 11, 12) et avec un dispositif d'évaluation (15), caractérisé en ce
qu'au moins trois capteurs ultrasonores (10, 11, 12) sont disposés sur un support (5a) fixé sur la poutre (4), à une distance (a) l'un de l'autre, dans le sens de déplacement du finisseur (1), telle qu'il y a chaque fois une distance entre les lobes des capteurs ultrasonores (10, 11, 12) sur une surface de référence,
que le dispositif d'évaluation (15) capte les distances (s1, s2, s3) de chacun des capteurs ultrasonores (10, 11, 12) par rapport à la surface de référence sur base des signaux ultrasonores,
que le dispositif d'évaluation (15) rejette, comme mesure erronée, l'une des distances mesurées (s1, s2, s3) lorsque le point de mesure concerné se situe de plus d'une distance prédéterminée en-dehors du plan qui est déterminé par les points de mesure associés aux autres distances, et
que le dispositif d'évaluation (15) calcule, sur base des distances (s1, s2, s3) non rejetées comme mesure erronée et de la disposition géométrique connue des capteurs ultrasonores (10, 11, 12) par rapport au bord arrière (9) de la poutre (4) flottant lors de la réalisation, la hauteur du bord arrière (9) de la poutre (4) par rapport à la surface de référence et dérive, de cette hauteur et d'une épaisseur de consigne pouvant être choisie, un signal de réglage de hauteur pour le réglage de la poutre (4).

2. Appareil de contrôle à capteurs ultrasonores suivant la revendication 1, caractérisé en ce
que les capteurs ultrasonores (10, 11, 12) sont placés, chacun, sur le support (5a) fixé à la poutre (4), à une hauteur connue, à des distances réciproques connues,
que le dispositif d'évaluation (15) détermine les différences (d12, d13, d23) de chaque fois deux distances (s1, s2; s1, s3; s2, s3), et
que le dispositif d'évaluation (15) considère comme valables les distances dont la quantité de différence est inférieure à une valeur limite.

3. Appareil de contrôle à capteurs ultrasonores suivant l'une des revendications 1 à 2, caractérisé en ce que le signal de réglage de hauteur généré par le dispositif d'évaluation (15) sert au réglage du point de traction du bras de traction (5) de la poutre (4) sur le finisseur (1).
